# EUROPEAN PATENT APPLICATION

(11) **EP 4 831 959 A1**
(43) Date of publication of application: **28.10.2026**
(21) Application number: 26173944.5
(22) Date of filing: 22.04.2026
(51) Int. Cl.: G08G 1/0962, B60K 35/22, B60K 35/23, B60K 35/29, G08G 1/16, B60W 50/14

(54) **DISPLAY CONTROL DEVICE**

(30) Priority: 24.04.2025 JP 2025072665
(71) Applicant: Toyota Jidosha Kabushiki Kaisha, Toyota-shi, Aichi-ken 471-8571 (JP)
(72) Inventor: HATTORI, Tsutomu, TOYOTA-SHI, AICHI-KEN, 471-8571 (JP); KONISHI, Shogo, TOYOTA-SHI, AICHI-KEN, 471-8571 (JP); NISHIDA, Takashi, TOYOTA-SHI, AICHI-KEN, 471-8571 (JP); TAKADA, Arata, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A meter ECU includes an acquisition unit configured to acquire a surrounding situation of a vehicle, and a control unit configured to, when an image indicating the surrounding situation of the vehicle is displayed on a monitor provided near a driver's seat of the vehicle and only one of rear-end points on both sides of an object located around the vehicle is recognized, fix a display position of an image indicating the object at a center of an image indicating a lane in which the object is traveling, and display the image indicating the object.

## Description

### BACKGROUND OF THE INVENTION

### 1. Field of the Invention

The present disclosure relates to a display control device.

### 2. Description of Related Art

Japanese Unexamined Patent Application Publication No. 2022-066952 (JP 2022-066952 A) discloses a technology in which, when another vehicle is present in a distant region ahead of a vehicle in a traveling direction outside a display range on a screen, a mark indicating that the other vehicle is present in the distant region ahead of the vehicle in the traveling direction outside the display range on the screen is displayed at a fixed position of a traveling lane displayed on the screen.

### SUMMARY OF THE INVENTION

With the technology disclosed in JP 2022-066952 A, a display position of an object located around a host vehicle is determined based on the positions of rear-end points on both sides of the object. However, when only a rear-end point on one side of the rear-end points on both sides of the object can be recognized, the reliability of the data is lower than when the rear-end points on both sides can be recognized, and the display position of the object may easily deviate from the actual position. That is, when only a rear-end point on one side can be recognized, for example, since the object may be displayed with the recognized rear-end point on one side serving as a center, the display position of the object may deviate from the actual position.

An object of the present disclosure is to provide a display control device that can suppress a deviation between an actual position and a display position of an object located around a host vehicle even when only a rear-end point on one side of rear-end points on both sides of the object can be recognized.

A display control device according to a first aspect includes an acquisition unit configured to acquire a surrounding situation of a host vehicle; and a display control unit configured to, when an image indicating the surrounding situation of the host vehicle is displayed on a display unit provided near a driver's seat of the host vehicle and only one of rear-end points on both sides of an object located around the host vehicle is recognized, fix a display position of an image indicating the object at a center of an image indicating a lane in which the object is traveling, and display the image indicating the object.

With the display control device according to the first aspect, a deviation between the actual position and the display position of the object located around the host vehicle can be suppressed even when only the rear-end point on one side of the rear-end points on both sides of the object can be recognized.

A display control device according to a second aspect is the display control device according to the first aspect, in which the display control unit is configured to, when a rear-end point of the object on a side farther from the host vehicle is recognized, fix the display position of the image indicating the object at the center of the image indicating the lane in which the object is traveling, and display the image indicating the object, and the display control unit is configured to display, when a rear-end point of the object on a side closer to the host vehicle is recognized, the image indicating the object based on an offset amount of the image indicating the object in a lane-width direction, the offset amount being determined depending on a type of the object.

With the display control device of the second aspect, since the rear-end point of the object on a side closer to the host vehicle has higher data reliability than the rear-end point of the object on a side farther from the host vehicle, a higher suppression effect can be obtained by defining the offset amount.

A display control device according to a third aspect is the display control device according to the second aspect, in which the offset amount is set to half of a width of the image indicating the object in the lane-width direction, the width being determined depending on the type of the object.

With the display control device according to the third aspect, a deviation between the actual position and the display position of the object can be suppressed without causing a sense of incongruity.

A display control device according to a fourth aspect is the display control device according to the second aspect or the third aspect, and further includes a determination unit configured to determine whether a position of the image indicating the object after being offset is appropriate based on a recognized position of the rear-end point of the object on the side closer to the host vehicle and a recognized position of a rear-center point of the object.

With the display control device according to the fourth aspect, it is possible to check whether the position of the image indicating the object after being offset is appropriate.

A display control device according to a fifth aspect is the display control device according to the fourth aspect, in which the display control unit is configured to, when a determination is made that the position of the image indicating the object after being offset is not appropriate, fix the display position of the image indicating the object at the center of the image indicating the lane in which the object is traveling, and display the image indicating the object.

With the display control device according to the fifth aspect, even when the position of the image indicating the object after being offset is not appropriate, a deviation between the actual position and the display position of the object can be suppressed.

As described above, according to the present disclosure, a deviation between an actual position and a display position of an object located around a host vehicle can be suppressed even when only a rear-end point on one side of rear-end points on both sides of the object can be recognized.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a hardware configuration of a vehicle;
FIG. 2A is a diagram for describing a positional relationship between the vehicle and a preceding vehicle that is an example of an object;
FIG. 2B is a diagram showing a display image representing the positional relationship between the vehicle and the preceding vehicle shown in FIG. 2A;
FIG. 3A is a diagram showing a traveling state of the vehicle and the preceding vehicle in which only a second rear-end point of the preceding vehicle on a side closer to the vehicle is recognized;
FIG. 3B is a diagram showing a traveling state of the vehicle and the preceding vehicle in which only a second rear-end point of the preceding vehicle on a side farther from the vehicle is recognized;
FIG. 4A is a diagram showing an example of a traveling state of the vehicle and the preceding vehicle according to an embodiment;
FIG. 4B is a diagram showing an example of a display position of a preceding vehicle image according to the embodiment;
FIG. 5 is a diagram for describing a method of checking appropriateness of an offset position; and
FIG. 6 is a flowchart showing an example of a flow of display control processing executed by a meter ECU.

### DETAILED DESCRIPTION OF EMBODIMENTS

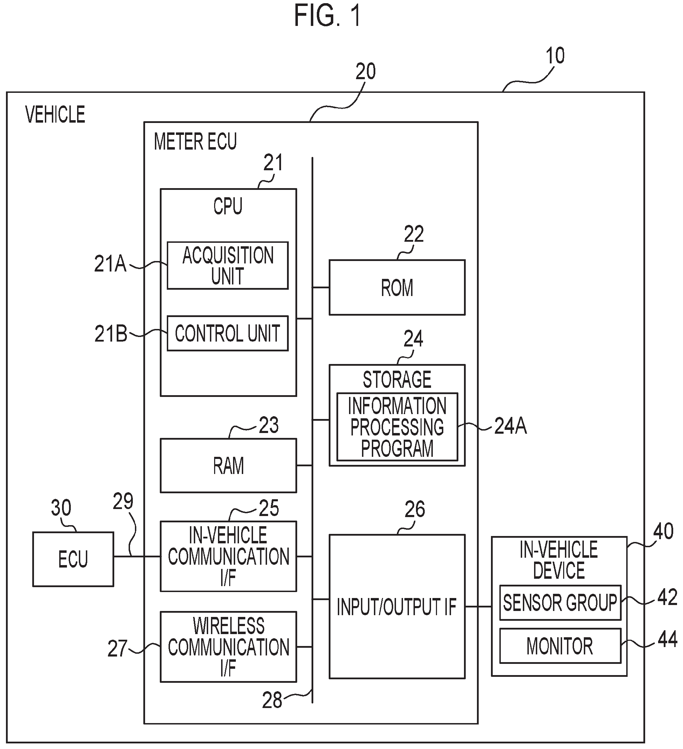

FIG. 1 is a block diagram showing a hardware configuration of a vehicle 10. As shown in FIG. 1, the vehicle 10 includes a meter electronic control unit (ECU) 20. The vehicle 10 is an example of a "vehicle" in the present disclosure, and the meter ECU 20 is an example of a "display control device" in the present disclosure.

The meter ECU 20 includes a central processing unit (CPU) 21, a read only memory (ROM) 22, a random access memory (RAM) 23, a storage 24, an in-vehicle communication interface (I/F) 25, an input/output I/F 26, and a wireless communication I/F 27. The components are communicably connected to each other via an internal bus 28.

The CPU 21 is a central processing unit, and executes various programs or controls each unit. That is, the CPU 21 reads a program from the ROM 22 or the storage 24, and executes the program using the RAM 23 as a work area. The CPU 21 performs control of each of the components and various types of arithmetic processing according to the program recorded in the ROM 22 or the storage 24.

The ROM 22 stores various programs and various types of data. The RAM 23 temporarily stores a program or data, as a work area.

The storage 24 is configured by a storage medium such as an embedded MultiMediaCard (eMMC) or universal flash storage (UFS), and stores various programs and various data. The storage 24 stores an information processing program 24A. The information processing program 24A is a program for causing the CPU 21 to execute display control processing according to the present embodiment.

The in-vehicle communication I/F 25 is an interface for connecting to another ECU 30, and a communication standard based on a controller area network (CAN) protocol is used. The in-vehicle communication I/F 25 is connected to an external bus 29. Although not shown, the ECU is not limited to the ECU 30 and a plurality of ECUs is provided according to various functions in the vehicle 10.

The input/output I/F 26 is an interface for communicating with an in-vehicle device 40 mounted on the vehicle 10.

The in-vehicle device 40 includes various devices mounted on the vehicle 10. The vehicle 10 includes a sensor group 42 and a monitor 44 as examples of the in-vehicle device 40.

The sensor group 42 includes various sensors and an imaging unit for detecting a state of the vehicle 10 and a surrounding situation of the vehicle 10. Specifically, the sensor group 42 includes, for example, various sensors such as a 3D-LiDAR sensor, a millimeter wave sensor, an infrared sensor, a blinker sensor, an accelerator position sensor, a vehicle speed sensor, a steering angle sensor, an angular velocity sensor, a global positioning system (GPS) sensor, an illuminance sensor, a gyro sensor, a steering wheel angle sensor, and an acceleration sensor, and a plurality of cameras that captures images of the surroundings of the vehicle 10. The sensor group 42 outputs detection results from the sensors and images captured by the cameras to predetermined electronic control units such as the meter ECU 20 and the ECU 30.

The monitor 44 is a meter display that is provided on a meter panel disposed in front of a driver's seat of the vehicle 10. The monitor 44 is for displaying suggestions for operation of functions of the vehicle 10 and images and the like related to explanations of the functions. The monitor 44 is an example of a "display unit" in the present disclosure.

The wireless communication I/F 27 is a wireless communication module for communicating with an external device. For example, communication standards such as 5G, LTE, Wi-Fi (registered trademark), and Bluetooth (registered trademark) are used in the wireless communication module.

In addition, the CPU 21 of the meter ECU 20 includes an acquisition unit 21A and a control unit 21B as functional components. Each functional component is realized by the CPU 21 that reads and executes the information processing program 24A stored in the storage 24.

The acquisition unit 21A acquires various types of information that can be acquired in the vehicle 10. Specifically, the acquisition unit 21A acquires detection information such as detection results from various sensors constituting the sensor group 42 and images captured by the cameras as various types of information. The acquisition unit 21A acquires surrounding information representing the surrounding situation of the vehicle 10.

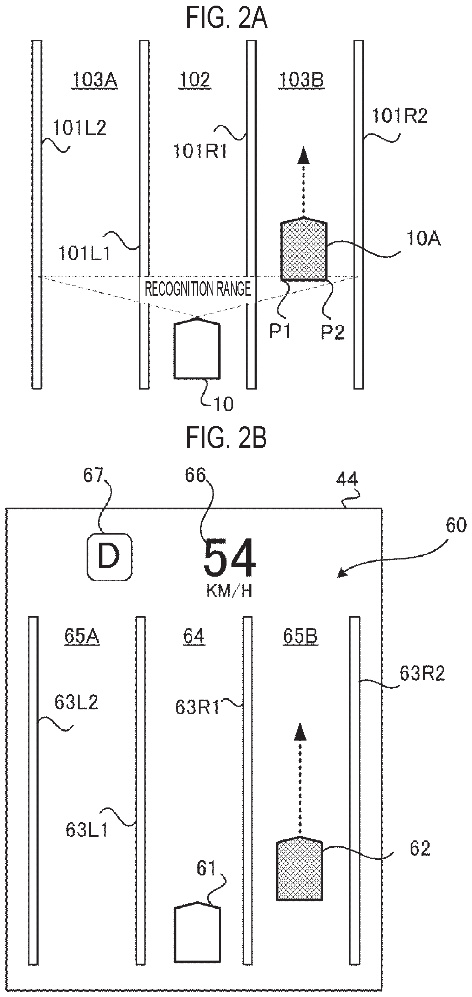

The control unit 21B performs display control related to the display of the monitor 44. For example, as the display control, the control unit 21B, based on the detection information acquired by the acquisition unit 21A, causes a surrounding situation display indicating the surrounding situation of the vehicle 10 when viewed from a virtual viewpoint, and a vehicle image indicating the vehicle 10 (see FIG. 2B, or the like) to be displayed on the monitor 44. Here, the "virtual viewpoint" is a viewpoint set in a three-dimensional virtual space in which the position of the vehicle image is set as an origin, and the virtual viewpoint is defined by predetermined viewpoint coordinates and a viewpoint angle (orientation) in the virtual space. As an example, the virtual viewpoint is a viewpoint that overlooks the vehicle 10 and the surroundings thereof at a specific viewpoint angle from a specific viewpoint coordinate located above the vehicle image in the virtual space. The control unit 21B is an example of a "display control unit" and a "determination unit" in the present disclosure.

FIG. 2A is a diagram for describing a positional relationship between the vehicle 10 and a preceding vehicle 10A that is an example of an object. In FIG. 2A, the vehicle 10 is traveling in a lane 102 that is defined by a first lane line 101L1 and a second lane line 101R1 on both sides of the vehicle 10. The first lane line 101L1 is a lane line on the left side of the vehicle 10, and the second lane line 101R1 is a lane line on the right side of the vehicle 10. An adjacent lane 103A is disposed on the left side of the lane 102, and an adjacent lane 103B is disposed on the right side of the lane 102. The adjacent lane 103A is defined by the first lane line 101L1 and a third lane line 101L2, and the adjacent lane 103B is defined by the second lane line 101R1 and a fourth lane line 101R2. When it is not necessary to particularly distinguish and describe the first lane line 101L1, the second lane line 101R1, the third lane line 101L2, and the fourth lane line 101R2, these lane lines are simply referred to as a lane line 101. The preceding vehicle 10A is traveling ahead of the vehicle 10 in the adjacent lane 103B. The preceding vehicle 10A includes a first rear-end point P1 and a second rear-end point P2 different from the first rear-end point P1. The first rear-end point P1 represents a left rear end of the preceding vehicle 10A, and the second rear-end point P2 represents a right rear end of the preceding vehicle 10A. The control unit 21B determines a position at which an image indicating the preceding vehicle 10A is displayed on the monitor 44, based on the positions of the first rear-end point P1 and the second rear-end point P2 of the preceding vehicle 10A recognized by the sensor group 42. FIG. 2B is a diagram showing a display image 60 representing the positional relationship between the vehicle 10 and the preceding vehicle 10A shown in FIG. 2A. For convenience of description, the display image 60 including a vehicle image 61 is shown two-dimensionally. As shown in FIG. 2B, the control unit 21B displays the display image 60 representing the positional relationship between the vehicle 10 shown in FIG. 2A in a predetermined display area of the monitor 44. The predetermined display area is a part of the monitor 44 and is set such that a driver seated in the driver's seat can visually recognize the display area through the opening of a steering wheel. The display image 60 includes the vehicle image 61 showing the vehicle 10, a preceding vehicle image 62 showing the preceding vehicle 10A, a first lane line image 63L1 showing the first lane line 101L1, a second lane line image 63R1 showing the second lane line 101R1, a third lane line image 63L2 showing the third lane line 101L2, a fourth lane line image 63R2 showing the fourth lane line 101R2, a lane image 64 showing the lane 102, and adjacent lane images 65A, 65B showing the adjacent lanes 103A, 103B. The first lane line image 63L1 is a lane line image on the left side of the vehicle image 61, and the second lane line image 63R1 is a lane line image on the right side of the vehicle image 61. When it is not necessary to particularly distinguish and describe the first lane line image 63L1, the second lane line image 63R1, the third lane line image 63L2, and the fourth lane line image 63R2, these lane line images are simply referred to as a lane line image 63. In addition, an image 66 showing a traveling speed of the vehicle 10 and an image 67 showing a shift position of the vehicle 10 are displayed above the lane image 64.

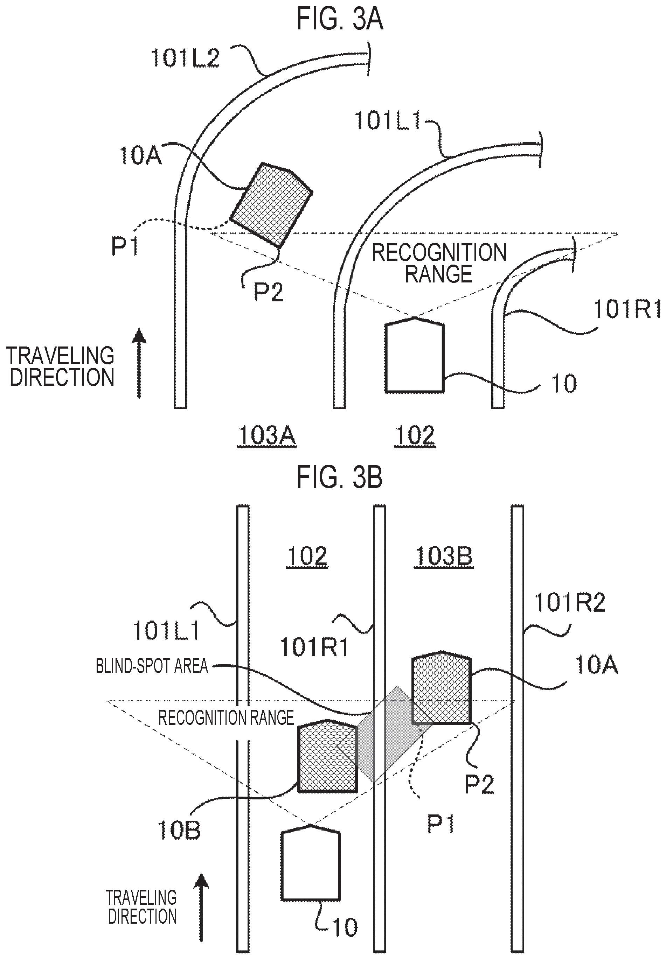

As described above, the display position of the preceding vehicle 10A is determined based on the positions of the rear-end points on both sides of the preceding vehicle 10A, but as shown in FIGS. 3A and 3B, when only a rear-end point on one side of the rear-end points on both sides of the preceding vehicle 10A can be recognized, the reliability of the data is lower than when the rear-end points on both sides can be recognized, and the display position of the preceding vehicle 10A may easily deviate from the actual position. That is, when only a rear-end point on one side can be recognized, for example, since the object may be displayed with the recognized rear-end point on one side serving as a center, the display position of the object may deviate from the actual position. FIG. 3A is a diagram showing a traveling state of the vehicle 10 and the preceding vehicle 10A in which only the second rear-end point P2 of the preceding vehicle 10A on a side closer to the vehicle 10 is recognized. FIG. 3B is a diagram showing a traveling state of the vehicle 10 and the preceding vehicle 10A in which only the second rear-end point P2 of the preceding vehicle 10A on a side farther from the vehicle 10 is recognized. In FIG. 3B, a case is shown in which the first rear-end point P1 of the preceding vehicle 10A cannot be recognized due to a blind spot caused by another preceding vehicle 10B traveling in the lane 102.

Accordingly, in the present embodiment, when the display image 60 that is an image indicating the surrounding situation of the vehicle 10 is displayed on the monitor 44 provided near the driver's seat of the vehicle 10 and only one of the first rear-end point P1 and the second rear-end point P2 on both sides of the preceding vehicle 10A located around the vehicle 10 is recognized, the control unit 21B fixes the display position of the preceding vehicle image 62 corresponding to the preceding vehicle 10A at the center of the adjacent lane image 65B indicating the adjacent lane 103B in which the preceding vehicle 10A is traveling, and displays the preceding vehicle image 62. Accordingly, even when only one of the rear-end points of the preceding vehicle 10A located around the vehicle 10 can be recognized, a deviation between the actual position and the display position of the preceding vehicle 10A can be suppressed.

Further, when a rear-end point of the preceding vehicle 10A on a side farther from the vehicle 10 is recognized, the control unit 21B may fix the display position of the preceding vehicle image 62 at the center of the adjacent lane image 65B and display the preceding vehicle image 62, and when a rear-end point of the preceding vehicle 10A on a side closer to the vehicle 10 is recognized, the control unit 21B may display the preceding vehicle image 62 based on an offset amount of the preceding vehicle image 62 in a lane-width direction. The offset amount is determined depending on the type of the preceding vehicle 10A. Since the rear-end point of the preceding vehicle 10A on a side closer to the vehicle 10 has higher data reliability than the rear-end point of the preceding vehicle 10A on a side farther from the vehicle 10, a higher suppression effect of display position deviation can be obtained by defining the offset amount. The position of the preceding vehicle image 62 in the lane-width direction is a position in a direction intersecting (for example, orthogonal to) the traveling direction (indicated by an arrow) of the preceding vehicle 10A, that is, a position in a left-right direction (lane-width direction) as viewed from the preceding vehicle 10A. The type of the preceding vehicle 10A is recognized by, for example, an object detection model (not shown). The type of the preceding vehicle 10A is recognized as, for example, a standard vehicle, a compact vehicle, a bus, a truck, or a two-wheeled vehicle (motorcycle). The type of the preceding vehicle 10A is associated in advance with the total length and the total width of the preceding vehicle 10A, and the center position of the preceding vehicle 10A is identified from the total length and the total width of the preceding vehicle 10A. The offset amount is an offset amount with respect to the rear-end point of the preceding vehicle image 62, and is reflected in the preceding vehicle image 62 when the preceding vehicle image 62 corresponding to the preceding vehicle 10A is displayed.

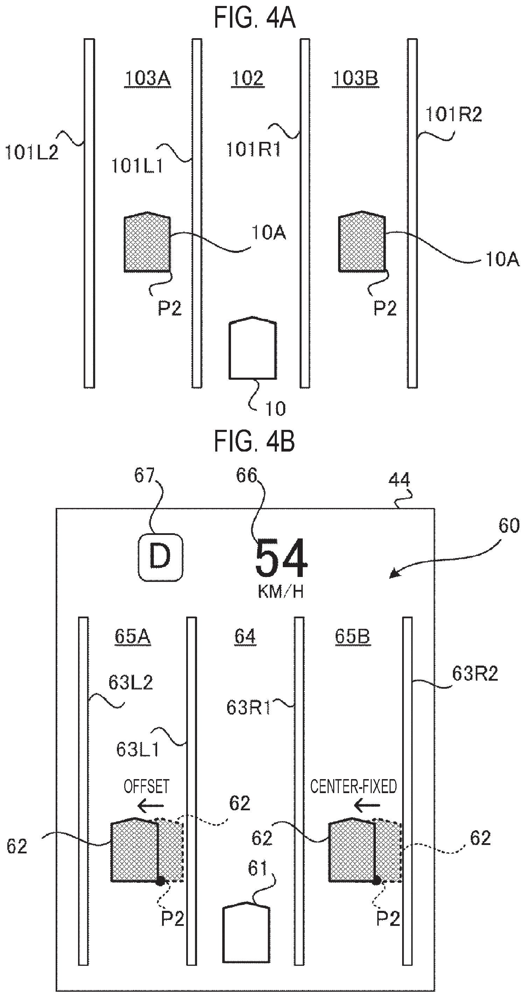

FIG. 4A is a diagram showing an example of a traveling state of the vehicle 10 and the preceding vehicle 10A according to the present embodiment. In FIG. 4A, the vehicle 10 is traveling in the lane 102, and the preceding vehicle 10A is traveling in the adjacent lane 103A or the adjacent lane 103B. FIG. 4B is a diagram showing an example of a display position of the preceding vehicle image 62 according to the present embodiment. In FIG. 4B, the preceding vehicle image 62 drawn with a solid line indicates the display position when the image is fixed at the center or when an offset is applied, and the preceding vehicle image 62 drawn with a dotted line indicates the display position when the image is fixed at the center or when no offset is applied. When only the second rear-end point P2 on one side of the preceding vehicle 10A can be recognized, as indicated by the dotted line in FIG. 4B, since the preceding vehicle image 62 is displayed with the recognized second rear-end point P2 on one side as the center, the display position deviates from the actual position of the preceding vehicle 10A. Therefore, when only the second rear-end point P2 of the preceding vehicle 10A (the rear-end point of the preceding vehicle 10A on a side farther from the vehicle 10) traveling on the adjacent lane 103B on the right side as viewed from the vehicle 10 is recognized, the control unit 21B fixes the display position of the preceding vehicle image 62 at the center of the adjacent lane image 65B and causes the preceding vehicle image 62 to be displayed. On the other hand, when only the second rear-end point P2 of the preceding vehicle 10A (the rear-end point of the preceding vehicle 10A on a side closer to the vehicle 10) traveling in the adjacent lane 103A on the left side as viewed from the vehicle 10 is recognized, the control unit 21B determines the offset amount of the preceding vehicle image 62 in the lane-width direction depending on the type of the preceding vehicle 10A, and displays the preceding vehicle image 62 based on the offset amount. The offset amount is preferably set to, for example, half of the width of the preceding vehicle image 62 in the lane-width direction. The width is determined depending on the type of the preceding vehicle 10A. Accordingly, a deviation between the actual position and the display position of the preceding vehicle 10A can be suppressed without causing a sense of incongruity. However, when only the second rear-end point P2 of the preceding vehicle 10A (the rear-end point of the preceding vehicle 10A on a side closer to the vehicle 10) traveling on the adjacent lane 103A on the left side as viewed from the vehicle 10 is recognized, the control unit 21B may fix the display position of the preceding vehicle image 62 at the center of the adjacent lane image 65A and cause the preceding vehicle image 62 to be displayed.

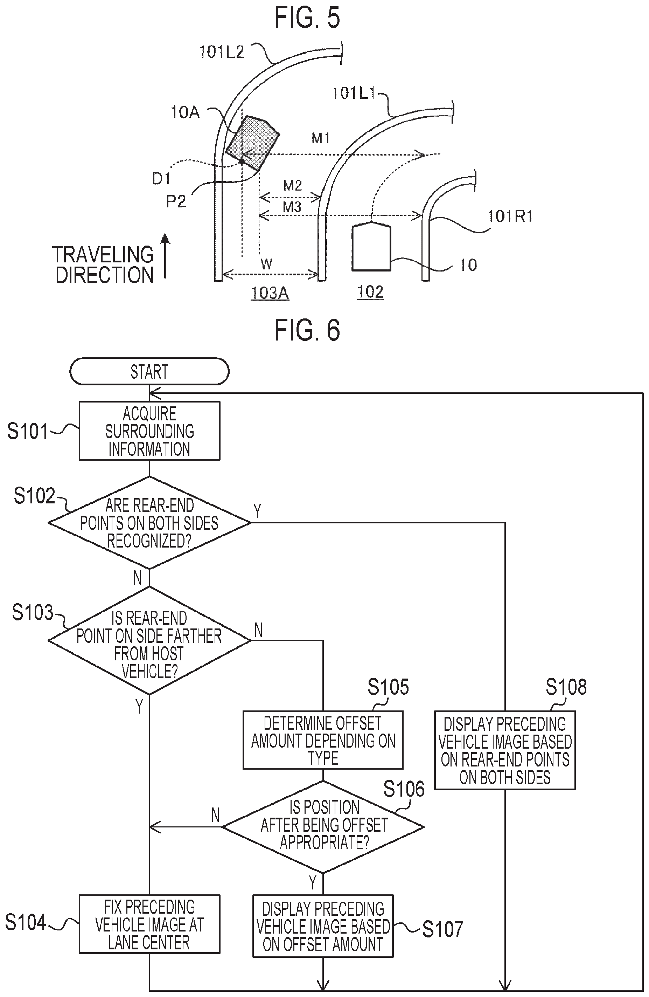

FIG. 5 is a diagram for describing a method of checking appropriateness of an offset position. In FIG. 5, the preceding vehicle 10A indicates the actual position and is traveling in the adjacent lane 103A. As shown in FIG. 5, the control unit 21B determines whether the display position of the preceding vehicle image 62 after being offset is appropriate based on a recognized position of the second rear-end point P2 of the preceding vehicle 10A on a side closer to the vehicle 10 and a recognized position of a rear-center point D1 of the preceding vehicle 10A. Specifically, when the position of the rear-center point D1 of the preceding vehicle 10A is defined as M1, the actual position of the second rear-end point P2 of the preceding vehicle 10A with respect to the first lane line 101L1 as a reference is defined as M2, the actual position of the second rear-end point P2 of the preceding vehicle 10A with respect to the second lane line 101R1 as a reference is defined as M3, and a lane width is defined as W, it is determined whether any of the following condition (1) or the following condition (2) is satisfied. Note that since the yaw angle of the preceding vehicle 10A is very small, the influence of the yaw angle is ignored. The position M1 is a distance from the center of the lane 102 to the rear-center point D1 of the preceding vehicle 10A and is a distance in the lane-width direction when a curved shape is converted into a linear shape. The position M2 is a distance from the first lane line 101L1 to the actual position of the second rear-end point P2 of the preceding vehicle 10A, and the position M3 is a distance from the second lane line 101R1 to the actual position of the second rear-end point P2 of the preceding vehicle 10A. The lane width W is, for example, 3.6 m, which is a typical lane width. $M 1 > M 2 + W / 2$ (1) $M 1 > M 3 - W / 2$ (2)

Accordingly, it is possible to check whether the display position of the preceding vehicle image 62 after being offset is appropriate. Here, when it is determined that the display position of the preceding vehicle image 62 after being offset is not appropriate, that is, when neither the condition (1) nor the condition (2) is satisfied, the control unit 21B may fix the display position of the preceding vehicle image 62 at the center of the adjacent lane image 65A corresponding to the adjacent lane 103A and cause the preceding vehicle image 62 to be displayed. Accordingly, even when the display position of the preceding vehicle image 62 after being offset is not appropriate, a deviation between the actual position and the display position of the preceding vehicle 10A can be suppressed. Specifically, when the condition (1) is applied, for example, in a case where M1 = 3.9 m, M2 = 1.7 m, and W/2 = 1.8 m, then 3.9 m > 1.7 m + 1.8 m and the display position is determined to be appropriate, and in a case where M1 = 2.7 m, M2 = 1.7 m, and W/2 = 1.8 m, then 2.7 m < 1.7 m + 1.8 m and the display position is determined to be not appropriate. On the other hand, when the condition (2) is applied, for example, in a case where M1 = 3.9 m, M3 = 5.3 m, and W/2 = 1.8 m, then 3.9 m > 5.3 m - 1.8 m and the display position is determined to be appropriate, and in a case where M1 = 2.7 m, M3 = 5.3 m, and W/2 = 1.8 m, then 2.7 m < 5.3 m - 1.8 m and the display position is determined to be not appropriate.

FIG. 6 is a flowchart showing an example of a flow of display control processing executed by the meter ECU 20. The CPU 21 reads the information processing program 24A from the storage 24, loads the information processing program 24A into the RAM 23, and executes the information processing program 24A to perform the display control processing. As an example, the display control processing is automatically executed repeatedly at predetermined time intervals.

In S101 of FIG. 6, the CPU 21 acquires surrounding information indicating the surrounding situation of the vehicle 10. Specifically, as described above, the vehicle 10 is provided with the sensor group 42 that can detect the surrounding situation, and the information detected by the sensor group 42 is acquired as the surrounding information.

In S102, the CPU 21 determines whether the first rear-end point P1 and the second rear-end point P2 on both sides of the preceding vehicle 10A can be recognized based on the surrounding information acquired in S101. When it is determined that the first rear-end point P1 and the second rear-end point P2 on both sides cannot be recognized, that is, when it is determined that only one of the first rear-end point P1 and the second rear-end point P2 on one side can be recognized (negative determination), the process proceeds to S103, and when it is determined that the first rear-end point P1 and the second rear-end point P2 on both sides can be recognized (positive determination), the process proceeds to S108.

In S103, the CPU 21 determines, as an example and as shown in FIG. 4A described above, whether the first rear-end point P1 or the second rear-end point P2 on one side recognized in S 102 is a rear-end point of the preceding vehicle 10A on a side farther from the vehicle 10. When it is determined that the rear-end point is a rear-end point of the preceding vehicle 10A on a side farther from the vehicle 10 (affirmative determination), the process proceeds to S104, and when it is determined that the rear-end point is not a rear-end point of the preceding vehicle 10A on a side farther from the vehicle 10, that is, when it is determined that the rear-end point is a rear-end point of the preceding vehicle 10A on a side closer to the vehicle 10 (negative determination), the process proceeds to S105.

In S104, the CPU 21, as an example and as shown in FIG. 4B, fixes the display position of the preceding vehicle image 62 corresponding to the preceding vehicle 10A at the center of the adjacent lane image 65B indicating the adjacent lane 103B in which the preceding vehicle 10A is traveling, causes the preceding vehicle image 62 to be displayed on the monitor 44, and returns to S101 to repeat the processing.

In S105, the CPU 21 determines an offset amount of the preceding vehicle image 62 depending on the type of the preceding vehicle 10A, with respect to the rear-end point of the preceding vehicle 10A on a side closer to the vehicle 10. The offset amount is preferably set to, for example, half the width of the preceding vehicle image 62 in the lane-width direction. The width is determined depending on the type of the preceding vehicle 10A.

In S106, the CPU 21, as an example and as shown in FIG. 5, determines whether the display position of the preceding vehicle image 62 after being offset in accordance with the offset amount determined in S105 is appropriate. When it is determined that the display position of the preceding vehicle image 62 after being offset is appropriate (positive determination), the process proceeds to S107, and when it is determined that the display position of the preceding vehicle image 62 after being offset is not appropriate (negative determination), the process proceeds to S104.

In S107, the CPU 21, as an example and as shown in FIG. 4B, causes the preceding vehicle image 62 to be displayed on the monitor 44 based on the offset amount determined in S105, and then returns to S101 to repeat the processing.

On the other hand, in S108, the CPU 21 causes the preceding vehicle image 62 to be displayed on the monitor 44 based on the first rear-end point P1 and the second rear-end point P2 on both sides, and then returns to S101 to repeat the processing.

As described above, according to the present embodiment, a deviation between the actual position and the display position of an object located around the host vehicle can be suppressed even when only a rear-end point on one side of rear-end points on both sides of the object can be recognized.

Note that various types of processing executed by the CPU 21 by reading and executing software (program) in the embodiment described above may be executed by various processors other than the CPU. Examples of the processor in this case include a programmable logic device (PLD) of which a circuit configuration can be changed after manufacture, such as a field-programmable gate array (FPGA), and a dedicated electric circuit that is a processor having a circuit configuration specially designed to execute specific processing, such as an application specific integrated circuit (ASIC). In addition, the various types of processing may be executed by one of the various processors, or may be executed by a combination of two or more processors of the same type or different types (for example, a plurality of FPGAs, and a combination of a CPU and an FPGA). Also, more specifically, the hardware structure of the various processors is an electric circuit in which circuit elements, such as semiconductor elements, are combined.

In addition, in the embodiment described above, a case has been described in which the information processing program 24A is stored (installed) in advance in the storage 24, but the present disclosure is not limited thereto. The information processing program 24A may also be provided in a form recorded on a recording medium, such as a compact disk read only memory (CD-ROM), a digital versatile disk read only memory (DVD-ROM), or a universal serial bus (USB) memory. In addition, the information processing program 24A may also be downloaded from an external device via a network. The technology of the present disclosure can also be applied to programs and program products.

## Claims

1. A display control device comprising:
an acquisition unit (21A) configured to acquire a surrounding situation of a host vehicle (10); and
a display control unit (21B) configured to, when an image (60) indicating the surrounding situation of the host vehicle is displayed on a display unit provided near a driver's seat of the host vehicle and only one of rear-end points on both sides of an object (10A) located around the host vehicle is recognized, fix a display position of an image (62) indicating the object at a center of an image (65B) indicating a lane (103B) in which the object is traveling, and display the image indicating the object.

2. The display control device according to claim 1, wherein:
the display control unit (21B) is configured to, when a rear-end point of the object (10A) on a side farther from the host vehicle (10) is recognized, fix the display position of the image (62) indicating the object at the center of the image (65B) indicating the lane (103B) in which the object is traveling, and display the image indicating the object; and
the display control unit is configured to display, when a rear-end point of the object (10A) on a side closer to the host vehicle (10) is recognized, the image indicating the object based on an offset amount of the image indicating the object in a lane-width direction, the offset amount being determined depending on a type of the object.

3. The display control device according to claim 2, wherein the offset amount is set to half of a width of the image (62) indicating the object (10A) in the lane-width direction, the width being determined depending on the type of the object.

4. The display control device according to claim 2 or 3, further comprising a determination unit (21B) configured to determine whether a position of the image (62) indicating the object (10A) after being offset is appropriate based on a recognized position of a rear-end point of the object on a side closer to the host vehicle (10) and a recognized position of a rear-center point (D1) of the object.

5. The display control device according to claim 4, wherein the display control unit (21B) is configured to, when a determination is made that the position of the image (62) indicating the object (10A) after being offset is not appropriate, fix the display position of the image indicating the object at the center of the image indicating the lane in which the object is traveling, and display the image indicating the object.
